# EUROPEAN PATENT SPECIFICATION

(11) **EP 0 475 134 B1**
(45) Date of publication and mention of the grant of the patent: **06.11.1996**
(21) Application number: 91113916.0
(22) Date of filing: 20.08.1991
(51) Int. Cl.: C08F 10/00, C08F 4/655, C08F 4/657

(54) **Method for producing a stereospecific polyolefin**
Verfahren zur Herstellung eines stereospezifischen Polyolefins
Procédé de préparation d'une polyoléfine stéréospécifique

(30) Priority: 04.09.1990 JP 232564/90
(43) Date of publication of application: 18.03.1992
(73) Proprietor: Tosoh Corporation, Shinnanyo-shi, Yamaguchi-ken, 746 (JP)
(72) Inventor: Hara, Daiji, Yokkaichi-shi, Mie-ken (JP); Mori, Mitsuhiro, Nakajima-gun, Aichi-ken (JP); Kondo, Yozo, Yokkaichi-shi, Mie-ken (JP)
(74) Representative: Wächtershäuser, Günter, Prof. Dr.

(56) References cited:
- EP-A- 0 275 317

## Description

This invention relates to a method for producing a stereospecific polyolefin. More particularly, this invention relates to a method which is capable of producing a highly stereospecific polymer having a good configuration of particles in good yield by using a specific catalyst in the (co)polymerization of an α-olefin having at least three carbon atoms.

Heretofore, as a catalyst for polymerization of olefins, α-type titanium trichloride obtained by reducing titanium tetrachloride with hydrogen, purple γ-type titanium trichloride obtained by reducing titanium tetrachloride with aluminum or δ-type titanium trichloirde obtained by pulverizing such titanium trichloride by a ball mil, has been known. Further, as a method for modifying such catalysts, it is known to subject them to mixing and pulverizing treatment together with various modifying agents. However, when such catalysts were used for polymerization, the polymerization activities were low, and the catalyst residues in the resulting polymers were substantial, whereby a so-called deashing step was necessary. Further, in recent years, many proposals have been made for the production of a solid catalyst component composed essentially of magnesium, titanium and halogen. However, in many of them, further improvements are desired with respect to the catalytic activities or the stereospecificity, and powder properties of the polymers.

The present inventors have previously proposed methods for obtaining stereospecific polyolefins in good yield by means of certain specific solid catalyst components comprising magnesium, titanium and halogen as the main components in Japanese Unexamined Patent Publications No. 3007/1988, No. 314210/1988, No. 317502/1988, No. 105/1989 and No. 165608/1989. In these methods, a catalyst component excellent in the catalytic activities and in the stereospecificity and the particle configuration of the polymer, is obtained by reacting a reaction product of a homogeneous solution containing Mg, Ti and an electron-donative compound and an aluminum halide compound, with a titanium halide and an electron-donative compound. However, when such catalysts are used in these methods, the control range of the particle size of the polymer particles has been limited to a level of at most 1,500 µm.

It is an object of the present invention to overcome such disadvantages of the conventional methods and to provide a method for preparing a catalyst for polymerization of olefins which is capable of controlling the particle size of the resulting polymer particles within a wide range.

As a result of extensive researches, the present invention has been accomplished by using in the method described in e.g. the above-mentioned Japanese Unexamined Patent Publication No. 3007/1988, a solid catalyst component prepared by using a homogeneous solution obtained by adding an oxygen-containing organic compound of aluminum to a homogeneous solution comprising Mg, Ti and an electron-donative compound, and as co-catalysts, an organometallic compound and an electron-donative compound.

Thus, the present invention provides a method for producing a stereospecific polyolefin in the presence of a catalyst comprising a transition metal compound and an organometallic compound, wherein a catalyst system is used which comprises:
(A) a solid catalyst component prepared by reacting a homogeneous solution containing
   (i) at least one member selected from the group consisting of (a) metal magnesium and a hydroxylated organic compound, and (b) oxygen-containing organic compounds of magnesium,
   (ii) an oxygen-containing organic compound of aluminum and
   (iii) an oxygen-containing organic compound of titanium, with
   (iv) at least one aluminum halide compound to obtain a solid product, and further reacting to this solid product
   (v) an electron-donative compound and
   (vi) a titanium halide compound,
(B) at least one member selected from the group consisting of organometallic compounds of Groups 1, 2, 12, 13 and 14 of the periodic Table, and
(C) an electron-donative compound.

Now, the present invention will be described in detail with reference to the preferred embodiments.

The solid catalyst component to be used in the present invention, can be prepared by reacting a homogeneous solution containing
(i) at least one member selected from the group consisting of (a) metal magnesium and a hydroxylated organic compound, and (b) oxygen-containing organic compounds of magnesium,
(ii) an oxygen-containing organic compound of aluminum and
(iii) an oxygen-containing organic compound of titanium, with
(iv) at least one aluminum halide compound to obtain a solid product, and further reacting to this solid product
(v) an electron-donative compound and
(vi) a titanium halide compound.

In the above reactant (i), when metal magnesium and a hydroxylated organic compound are used, metal magnesium can take any form such as powdery form, granular form, foil form, and ribbon form, and as the hydroxylated organic compound, alcohols and organosilanols are suitable.

As the alcohols, linear or branched aliphatic alcohols having 1 to 18 carbon atoms or alicyclic or aromatic alcohols can be used. Specific examples include methanol, ethanol, n-propanol, i-propanol, n-butanol, n-hexanol, 2-ethylhexanol, n-octanol, i-octanol, n-stearyl alcohol, cyclopentanol, cyclohexanol, and ethylene glycol, phenol, cresol, xylenol and hydroquinone.

The organosilanols are normally those having at least one hydroxyl group and an organic group selected from an alkyl group with 1 to 12, preferably 1 to 6, carbon atoms, a cycloalkyl group, an arylalkyl group, an aryl group, and an alkylaryl group. For example, trimethylsilanol, triethylsilanol, triphenylsilanol, and t-butyldimethylsilanol may be mentioned.

These hydroxylated organic compounds can be used alone or as a mixture of two or more of them.

In addition, when metal magnesium is used to prepare a solid catalyst component (A) of the present invention, for the purpose of accelerating the reaction, it is preferable to add one or more substances that will react with metal magnesium or form an adduct, e.g. polar substances such as iodine, mercuric chloride, halogenated alkyls, and organic acids.

As compounds belonging to the oxygen-containing organic compounds of magnesium, the following compounds may, for example, be mentioned: magnesium alkoxides such as magnesium methylate, magnesium ethylate, magnesium isopropylate, magnesium decanolate, magnesium methoxyethylate and magnesium cyclohexanolate, magnesium alkylalkoxides such as magnesium ethylethylate, magnesium hydroalkoxides such as magnesium hydroxymethylate, magnesium phenoxides such as magnesium phenate, magnesium naphthenate, magnesium phenanthlenate and magnesium cresolate, and magnesium carboxylates such as magnesium acetate, magnesium stearate, magnesium benzoate, magnesium phenylacetate, magnesium adipate, magnesium sebacate, magnesium phthalate, magnesium acrylate and magnesium oleate, magnesium oxymates such as magnesium butyloxymates, magnesium dimethylglyoxymates and magnesium cyclohexyloxymate, magnesium hydroxamate salts, magnesium hydroxylamine salts such as N-nitroso-N-phenyl-hydroxylamine derivatives, magnesium enolates such as magnesium acetylacetonate, and magnesium silanolates, such as magnesium triphenyl silanolate compounds. These oxygen-containing organic magnesium compounds may be used alone or in combination as a mixture of two or more of them.

As the oxygen-containing organic compound of aluminum for the above-mentioned reactant (ii), an oxygen-containing organic compound of the formula Al(OR¹)ₘX₃₋ₘ may be used. In the formula, R¹ is a hydrocarbon group having from 1 to 20 carbon atoms, preferably from 1 to 10 carbon atoms. As such a hydrocarbon group, a linear or branched alkyl group, a cycloalkyl group, an arylalkyl group, an aryl group and an alkylaryl group, may be mentioned. In the formula, m is a number of 0<m≦3, and X is a halogen atom.

Specific examples of the oxygen-containing organic compound of aluminum, include trimethoxy aluminum, triethoxy aluminum, tri-n-propoxy aluminum, tri-i-propoxy aluminum, tri-n-butoxy aluminum, tri-sec-butoxy aluminum, tri-tert-butoxy aluminum, tri(2-ethylhexoxy)aluminum, triphenoxy aluminum, tribenzyloxy aluminum, tribenzyloxy aluminum, dichloromethoxy aluminum, chlorodimethoxy aluminum, dichloro(2-ethylhexoxy) aluminum, chlorodi(2-ethylhexoxy) aluminum, dichlorophenoxy aluminum and chlorodiphenoxy aluminum. Use of several oxygen-containing organic compounds of aluminum having different hydrocarbon groups is also included in the scope of the present invention. These oxygen-containing organic compounds of aluminum may be used alone or in combination as a mixture of two or more of them.

As the oxygen-containing organic compound for the above-mentioned reactant (iii), a compound of the formula [OₚTi(OR²)_{q}]ₙ may be used. In this formula R² is a hydrocarbon group having from 1 to 20 carbon atoms, preferably from 1 to 10 carbon atoms. As such a hydrocarbon group, a linear or branched alkyl group, a cycloalkyl group, an arylalkyl group, an aryl group and an alkylaryl group may be mentioned. In the formula, p and q are numbers satisfying p≧0 and q>0 and agreeable with the valence of Ti, and n is an integer. It is particularly preferred to use an oxygen-containing organic compound of titanium wherein o≦p≦1 and 1≦q≦6.

Specific examples include titanium tetraethoxide, titanium tetra-n-propoxide, titanium tetra-i-propoxide, titanium tetra-n-butoxide and hexa-i-propoxy dititanate. Use of several oxygen-containing organic compounds of titanium having different hydrocarbon groups is included in the scope of the present invention. These oxygen-containing organic compounds of titanium may be used alone or may be used by mixing or reacting two or more of them.

As the aluminum halide compound for the above-mentioned reactant (iv), those represented by the general formula AlR³ᵣX₃₋ᵣ may be used. In the formula, R³ represents a hydrocarbon group having from 1 to 20 carbon atoms, X represents a halogen atom, and r is a number of 0<r≦2. It is preferable that R³ is selected from a linear or branched alkyl group, an alkoxy group, a cycloalkyl group, an arylalkyl group, an aryl group and an alkylaryl group.

The above aluminum halide compounds may be used alone or as a mixture of two or more of them.

Specific examples of the aluminum halide compound include, for example, ethyl aluminum dichloride, n-propylaluminum dichloride, n-butylaluminum dichloride, i-butylaluminum dichloride, ethylaluminum sesquichloride, i-butylaluminum sesquichloride, i-propylaluminum sesquichloride, n-propylaluminum sesquichloride, diethylaluminum chloride, di-i-propylaluminum chloride, di-n-propylaluminum chloride, di-i-butylaluminum chloride, diethylaluminum bromide, and diethylaluminum iodide.

As the electron-donative compound for the above-mentioned reactant (v), ethers, esters, ketones, phenols, amines, amides, imines, nitriles, phosphines, phosphites, stibines, arsines, phosphoryl amides and alcoholates may be mentioned.

Among them, esters are preferred, and organic esters are most preferred.

As the organic esters, mono or diesters of an aromatic carboxylic acid and mono or diesters of an aliphatic carboxylic acid may be mentioned.

Specific examples include, for example, butyl formate, ethyl acetate, butyl acetate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl succinate, diethyl glutarate, dibutyl glutarate, diisobutyl glutarate, diisobutyl adipate, dibutyl sebacate, diethyl maleate, dibutyl maleate, diisobutyl maleate, monomethyl fumarate, diethyl fumarate, diisobutyl fumarate, diethyl tartarate, dibutyl tartarate, diisobutyl tartarate, methyl benzoate, ethyl benzoate, methyl p-toluate, ethyl p-toluate, ethyl p-tert butylbenzoate, ethyl p-anisate, isobutyl α-naphthoate, ethyl cinnamate, monomethyl phthalate, dibutyl phthalate, diisobutyl phthalate, dihexyl phthalate, dioctyl phthalate, di-2-ethylhexyl phthalate, diallyl phthalate, diphenyl phthalate, diethyl isophthalate, diisobutyl isophthalate, diethyl terephthalate, dibutyl terephthalate, diethyl naphthalate and dibutyl naphthalate. Such electron-donative compounds (v) may be used alone or in combination as a mixture of two or more of them.

As the titanium halide compound for the above-mentioned reactant (vi), compounds represented by the general formula Ti(OR⁴)_{f}X_{4-f} may be used. In the formula, R⁴ represents a hydrocarbon group having 1 to 20 carbon atoms, x represents a halogen atom and f is a number of 0≦f<4. R⁴ is preferably selected from a linear or branched alkyl group, an alkoxy group, a cycloalkyl group, an arylalkyl group, an aryl group and an alkylaryl group. The above-mentioned titanium halide compounds may be used alone or in combination as a mixture of two or more of them.

Specific examples of the titanium halide compound include, for example, titanium tetrachloride, ethoxy titanium trichloride, propoxy titanium trichloride, butoxy titanium trichloride, phenoxy titanium trichloride, diethoxy titanium dichloride and triethoxy titanium chloride.

The solid catalyst component obtainable by the present invention, can be prepared by reacting the reactant (iv) to a homogeneous solution obtained by reacting the above reactants (i), (ii) and (iii) and then reacting the reactants (v) and (vi) to the obtained solid product.

These reactions are preferably conducted in a liquid medium. For this purpose, especially when these reactants are not liquid under the operational conditions or the amount of liquid reactants is inadequate, these reactions should be conducted in the presence of an inert organic solvent. As such an inert organic solvent, any solvent commonly used in this technical field may be employed, and aliphatic, alicyclic or aromatic hydrocarbons or halogenated derivatives or mixtures thereof may be employed. For examples, isobutane, pentane, isopentane, hexane, heptane, cyclohexane, benzene, toluene, xylene, chlorobenzene, 1,2-dichlorobenzene, 1,3-dichlorobenzene, benzyl chloride, methylene dichloride, 1,2-dichloroethane, 1,3-dichloropropane, 1,4-dichlorobutane, 1,1,1-trichloroethane, 1,1,2-trichloroethane, 1,1,1,2-tetrachloroethane, 1,1,2,2-tetrachloroethane, tetrachloroethylene, carbon tetrachloride or chloroform may be mentioned. These organic solvents may be used alone or in combination as a mixture. When a halogen derivative or a mixture of halogen derivatives is used, good results may sometimes be obtainable with respect to the polymerization activities and the stereospecificity of the polymer.

There is no particular restriction as to the amounts of the reactants (i), (ii), (iii), (iv), (v) and (vi) to be used in the present invention. However, the molar ratio of the magnesium atom (i) to the oxygen containing organic compound of aluminum (ii) is preferably within a range of from 1:0.01 to 1:20. Particularly when polymer particles having a pellet size of at least 3,000 µm are to be obtained, the molar ratio is preferably selected within a range of from 1:0.05 to 1:10. Further, it is preferred to select the amounts so that the molar ratio of the magnesium atom (i) to the oxygen-containing organic compound of titanium (iii) will be from 1:0.01 to 1:20, particularly from 1:0.1 to 1:5 in order to obtain polymer particles of a pellet size having excellent powder properties. Further, it is preferred to select the amounts of the reactants so that the ratio of the magnesium atom (i) to the aluminium atom in the aluminum halide compound (iv) will be within a range of from 1:0.1 to 1:100, particularly from 1:0.1 to 1:20. If the ratio of the aluminum atom increases beyond this range, the catalytic activities tend to be low, or it tends to be difficult to obtain good powder properties. On the other hand, if it is too small, it may sometimes be difficult to obtain good powder properties.

It is preferred to select the amounts so that the molar ratio of the magnesium atom (i) to the electron-donative compound (v) will be from 1:0.05 to 1:5.0, particularly from 1:0.1 to 1:2.0. If the amounts are outside this range, a problem may arise such that the polymerization activities tend to be low, or the stereospecificity of the polymer tends to be low. Further, it is preferred to select the amounts of the reactants so that the molar ratio of the magnesium atom (i) to the titanium halide compound (vi) will be within a range of from 1:1 to 1:100, particularly from 1:3 to 1:50. If the amounts are outside this range, a problem may arise such that the polymerization activities tend to be low, or the products tend to be colored.

The reaction to obtain the homogeneous solution from the reactants (i), (ii) and (iii) is conducted usually at a temperature within a range of from -50 to 300°C, preferably from 0 to 200°C for from 0.5 to 50 hours, preferably from 1 to 6 hours, in an inert gas atmosphere under atmospheric pressure or an elevated pressure. In such a case, it is possible to homogenize the solution in a shorter period of time by adding the same electron-donative compound as the above-mentioned compound (v).

Further, the reaction with the reactants (iv), (v) and (vi) is conducted usually at a temperature within a range of from -50 to 200°C, preferably from -30 to 150°C for from 0.2 to 50 hours, preferably from 0.5 to 10 hours in an inert gas atmosphere under atmospheric pressure or an elevated pressure.

The reaction conditions for the reactant (iv) are very important, since they give a decisive role for the control of the particle sizes and the particle configurations of the resulting solid product and the solid catalyst component and the polymer particles obtained by using the solid catalyst

Further, the reaction with the reactant (vi) may be conducted in a divided fashion in multi stages. Further, at the time of the reaction with the reactant (vi), ethylene and/or an α-olefin of the formula R-CH=CH₂ wherein R is a linear or branched substituted or unsubstituted alkyl group having from 1 to 10, particularly from 1 to 8, carbon atoms, or a hydrogen atom, may be present. In such a case, it is often possible to obtain an effect such as an improvement in the polymerization activities or in the stereospecificity of the polymer.

The solid catalyst component (A) thus obtained, may be used as it is. However, it is common to remove the remaining unreacted substances and by-products by filtration or decantation, then thoroughly wash it with an inert organic solvent and suspend it in an inert organic solvent for use. It is also possible to use the one which is isolated after washing and then heated under atmospheric pressure or under reduced pressure to remove the inert organic solvent. Further, prior to the main polymerization, a small amount of an organometallic compound component may be added and it is polymerized with a small amount of an α-olefin and/or ethylene of the formula R-CH=CH₂ wherein R is a linear or branched substituted or unsubstituted alkyl group having from 1 to 10, particularly from 1 to 8, carbon atoms, or a hydrogen atom, so that it can be used in a preliminarily polymerized form.

The solid catalyst component for component (A) thus obtained is used for the polymerization of an olefin in combination with the organometallic compound for component (B) and the electron-donative compound for component (C). As the organometallic compound for component (B), an organometallic compound composed of a metal such as lithium, magnesium, zinc, tin or aluminum and an organic group, may be mentioned. As the organic group, an alkyl group may be mentioned as a representative. As such an alkyl group, a linear or branched alkyl group having from 1 to 20 carbon atoms, may be employed. Specifically, n-butyl lithium, diethyl magnesium, diethyl zinc, trimethyl aluminum, triethyl aluminum, tri-i-butyl aluminum, tri-n-butyl aluminum, tri-n-decyl aluminum, tetraethyl tin or tetrabutyl tin, may, for example, be mentioned. It is particularly preferred to use a trialkyl aluminum having a linear or branched alkyl group having from 1 to 10 carbon atoms. Further, an alkyl metal halide haying an alkyl group of from 1 to 20 carbon atoms, such as ethyl aluminum sesquichloride, diethyl aluminum chloride, diisobutyl aluminum chloride or an alkyl metal alkoxide such as diethyl aluminum ethoxide, may also be employed. These organometallic compounds may be used alone or in combination as a mixture of two or more of them.

As the electron-donative compound for component (C) organic esters, oxygen-containing organic compounds of silicon and nitrogen-containing organic compounds are preferred.

As the organic esters, the same compounds as the reactant (v) to be used for the preparation of the solid catalyst component (A) may be mentioned. Among them, preferred are aliphatic carboxylic esters and aromatic carboxylic esters. Specifically, the aliphatic carboxylic esters include, for example, ethyl acetate, propyl acetate, butyl acetate, methyl propionate, ethyl propionate and ethyl butylate, having from 2 to 18 carbon atoms. The aromatic carboxylic esters include, for example, methyl benzoate, ethyl benzoate, methyl p-toluate, ethyl p-toluate, methyl anisate and ethyl anisate, having from 8 to 24 carbon atoms. Such organic esters may be used alone, or two or more of them may be mixed or reacted for use.

As the oxygen-containing organic compounds of silicon, oxygen-containing organic compounds of silicon of the formula R⁵ₛSi(OR⁶)ₜX₄₋₍ₛ₊ₜ₎ may be used. In the formula, each of R⁵ and R⁶ is a hydrocarbon group having from 1 to 20, preferably from 1 to 10, carbon atoms, such as a linear or branched alkyl group, a cycloalkyl group, an arylalkyl group, an aryl group or an alkylaryl group, or a hydrogen atom, s and t represent numbers satisfying 0≦s≦3, 1≦t≦4 and 1≦s + t≦4, and X is a halogen atom.

As specific examples, there may be mentioned alkoxysilanes or aryloxysilanes, such as tetramethoxysilane, tetraethoxysilane, tetra-n-propoxysilane, tetra-i-propoxysilane, tetra-n-butoxysilane, tetra-i-pentoxysilane, tetra-n-hexoxysilane, tetraphenoxysilane, tetrakis(2-ethylhexoxy)silane, tetrakis(2-ethylbutoxy)silane, tetrakis(2-methoxyethoxy)silane, methyltrimethoxysilane, ethyltrimethoxysilane, n-butyltrimethoxysilane, phenyltrimethoxysilane, vinyltrimethoxysilane, chloromethyltrimethoxysilane, 3-chloropropyltrimethoxysilane, 4-chlorophenyltrimethoxysilane, trimethoxysilane, methyltriethoxysilane, ethyltriethoxysilane, n-propyltriethoxysilane, n-butyltriethoxysilane, phenyltriethoxysilane, vinyltriethoxysilane, 3-aminopropyltriethoxysilane, triethoxysilane, ethyltri-i-propoxysilane, vinyltri-i-propoxysilane, i-pentyltri-n-butoxysilane, methyltri-i-pentoxysilane, ethyltri-i-pentoxysilane, methyltri-n-hexoxysilane, phenyltri-i-pentoxysilane, n-propyltrimethoxysilane, i-propyltrimethoxysilane, i-butyltrimethoxysilane, dimethyldimethoxysilane, methylphenyldimethoxysilane, diphenyldimethoxysilane, methyldimethoxysilane, dimethyldiethoxysilane, diethyldiethoxysilane, diphenyldiethoxysilane, methyldodecyldiethoxysilane, methyloctadecyldiethoxysilane, methylphenyldiethoxysilane, methyldiethoxysilane, dibenzyldiethoxysilane, diethoxysilane, dimethyldi-n-butoxysilane, dimethyldi-i-pentoxysilane, diethyldi-i-pentoxysilane, di-i-butyldi-i-pentoxysilane, diphenyldi-i-pentoxysilane, diphenyldi-n-octoxysilane, diisobutyldimethoxysilane, norbornyltrimethoxysilane, norbornenyltrimethoxysilane, isopropyltrimethoxysilane, sec-butyltrimethoxysilane, t-butyltrimethoxysilane, sec-amyltrimethoxysilane, t-amyltrimethoxysilane, cyclohexyltrimethoxysilane, cyclopentyltrimethoxysilane, cyclobutyltrimethoxysilane, norbornyltriethoxysilane, norbornenyltriethoxysilane, isopropyltriethoxysilane, sec-butyltriethoxysilane, t-butyltriethoxysilane, cyclohexyltriethoxysilane, cyclopentyltriethoxysilane, cyclobutyltriethoxysilane, sec-amyltriethoxysilane, t-amyltriethoxysilane, dinorbornyldimethoxysilane, norbornylmethyldimethoxysilane, dinorbornenyldimethoxysilane, norbornenylmethyldimethoxysilane, diisopropyldimethoxysilane, di(sec-butyl)dimethoxysilane, sec-butylmethyldimethoxysilane, sec-butylisopropyldimethoxysilane, cyclohexylmethyldimethoxysilane, dicyclohexyldimethoxysilane, t-butylmethyldimethoxysilane, t-butylisopropyldimethoxysilane, di(t-butyl)dimethoxysilane, cyclopentylmethyldimethoxysilane, dicyclopentyldimethoxysilane, cyclobutylmethyldimethoxysilane, dicyclobutyldimethoxysilane, di(t-amyl)dimethoxysilane, (t-amyl)methyldimethoxysilane, t-amyl-i-propyldimethoxysilane, t-butyl-t-amyldimethoxysilane, bis(l,l-diethylpropyl)dimethoxysilane, (1,1-diethylpropyl)methyldimethoxysilane, bis(1,1-dicyclohexylethyl)dimethoxysilane, bis(1-cyclohexyl-1-methylethyl)dimethoxysilane, bis(1-cyclohexylethyl)dimethoxysilane, di(sec-amyl)dimethoxysilane, (sec-amyl)methyldimethoxysilane, diisoamyldimethoxysilane, dicyclopentadienyldimethoxysilane, cyclopentadienylmethyldimethoxysilane, dinorbornyldiethoxysilane, norbornylmethyldiethoxysilane, dinorbornenyldiethoxysilane, norbornenylmethyldiethoxysilane, diisopropyldiethoxysilane, di(sec-butyl)diethoxysilane, sec-butylmethyldiethoxysilane, sec-butylisopropyldiethoxysilane, cyclohexylmethyldiethoxysilane, dicyclohexyldiethoxysilaner t-butylmethyldiethoxysilane, t-butyl-isopropyldiethoxysilane, di(t-butyl)diethoxysilane, cyclopentylmethyldiethoxysilane, dicyclopentyldiethoxysilane, cyclobutylmethyldiethoxysilane, dicyclobutyldiethoxysilane, di(t-amyl)diethoxysilane, (t-amyl)methyldiethoxysilane, t-amyl-i-propyldiethoxysilane, t-butyl-t-amyldiethoxysilane, bis(1,1-diethylpropyl)diethoxysilane, (1,1-diethylpropyl)methyldiethoxysilane, bis(1,1-dicyclohexylethyl)diethoxysilane, bis(1-cyclohexyl-1-methylethyl)diethoxysilane, bis(1-cyclohexylethyl)diethoxysilane, di(sec-amyl)diethoxysilane, (sec-amyl)methyldiethoxysilane, diisoamyldiethoxysilane, dicyclopentadienyldiethoxysilane, cyclopentadienylmethyldiethoxysilane, trimethylmethoxysilane, trimethylethoxysilane, dimethylethoxysilane, trimethyl-i-propoxysilane, trimethyl-n-propoxysilane, trimethyl-t-butoxysilane, trimethyl-i-butoxysilane, trimethyl-n-butoxysilane, trimethyl-n-pentoxysilane and trimethylphenoxysilane, or haloalkoxysilanes, or haloaryloxysilanes such as dichlorodiethoxysilane, dichlorodiphenoxysilane and tribromoethoxysilane. Such oxygen-containing organic compounds of silicon may be used alone or two or more of them may be mixed or reacted for use.

As the nitrogen-containing organic compounds, compounds having nitrogen atoms in the molecules and having functions as Lewis bases may be mentioned. Specifically, they include, for example, amide compounds such as acetic N,N-diemthylamide, benzoic N,N-dimethylamide and toluic N,N-diemthylamide, piperidine compounds such as 2,2,6,6-tetramethylpiperidine, 2,6-diisopropylpiperidine, 2,6-diisobutylpiperidine, 2,6-diisobutyl-4-methylpiperidine, 2,2,6-trimethylpiperidine, 2,2,6,6-tetraethylpiperidine, 1,2,2,6,6-pentamethylpiperidine, 2,2,6,6-tetramethyl-4-piperidylbenzoate and bis(2,2,6,6-tetramethyl-4-piperidyl)sebacate, pyridine compounds such as 2,6-diisopropylpyridine, 2,6-diisobutylpyridine and 2-isopropyl-6-methylpyridine, pyrrolidine compounds such as 2,2,5,5-tetramethylpyrrolidine, 2,5-diisopropylpyrrolidine, 2,2,5-trimethylpyrrolidine, 1,2,2,5,5-pentamethylpyrrolidine and 2,5-diisobutylpyrrolidine, amine compounds such as trimethylamine, triethylamine, tributylamine, tribenzylamine, tetramethylethylenediamine, diisopropylethylamine, tert-butyldimethylamine, diphenylamine and di-o-tolylamine, and aniline compounds such as N,N-diethylaniline and N,N-diisopropylaniline. Such nitrogen-containing organic compounds may be used alone or two or more of them may be mixed or reacted for use.

These electron-donative compounds may be used in combination.

The solid catalyst component (A) is used preferably in an amount corresponding to from 0.001 to 2.5 mmol of titanium atom per liter of the reactor. The organometallic compound (B) is used usually at a concentration of from 0.02 to 50 mmol, preferably from 0.2 to 5 mmol, per liter of the reactor. The electron-donative compound (C) is used usually at a concentration of from 0.001 to 50 mmol, preferably from 0.01 to 5 mmol, per liter of the reactor.

There is no particular restriction as to the manner of introducing the three components in the present invention. For examples, it is possible to employ a method wherein the components (A), (B) and (C) are separately introduced into the polymerization reactor, or a method wherein the components (A) and (B) are contacted, and then the component (C) is contacted thereto for polymerization, or a method wherein the components (B) and (C) are contacted, and then the component (A) is contacted thereto for polymerization, or a method wherein the components (A), (B) and (C) are preliminarily contacted, followed by polymerization.

The polymerization of an olefin is conducted at a reaction temperature lower than the melting point of the polymer in a gas phase or in a liquid phase. When the polymerization is conducted in a liquid phase, an inert solvent may be used as the reaction medium, although the olefin itself may be used as the reaction medium. As such an inert solvent, any solvent which is commonly employed in this technical field may be employed. Particularly preferred is an alkane or a cycloalkane having from 4 to 20 carbon atoms, such as isobutane, pentane, hexane or cyclohexane.

As the olefin to be polymerized in the method for producing a stereospecific polyolefin according to the present invention, an α-olefin of the formula R⁷-CH=CH₂ wherein R⁷ is a linear or branched substituted or unsubstitued alkyl group having from 1 to 10, particularly from 1 to 8, carbon atoms, may be mentioned. Specifically, propylene, 1-butene, 1-pentene, 4-methyl-1-pentene or l-octene, may be mentioned. These olefins may be subjected to not only homopolymerization, but also to random copolymerization or block copolymerization. For the copolymerization, two or more of the above-mentioned α-olefins, or an α-olefin and ethylene or a diene such as butadiene or isoprene, may be used for polymerization. It is particularly preferred to conduct the polymerization by using propylene, propylene and ethylene, propylene and the above-mentioned α-olefin other than propylene, or propylene and a diene.

There is no particular restriction as to the reaction conditions for polymerization, so long as the polymerization is conducted at a reaction temperature lower than the melting point of the polymer. However, a reaction temperature of from 20 to 100°C and a pressure of from 2 to 50 kg/cm² G (1 kg/cm² G = 0.981 bar G) are usually selected.

The reactor to be used for the polymerization step may be any reactor which is commonly used in this particular field. Namely, the polymerization operation may be conducted in a continuous system, in a semi-batch system or in a batch system using a stirring tank type reactor, a fluidized bed reactor or a circulation type reactor. Further, it is also possible to conduct the polymerization in a plurality of steps under different polymerization reaction conditions.

The first effect is that it is possible to obtain polymer particles having a high bulk density and an average particle size of a desired level with little fine particles, particularly polymer particles of a pellet size with a particle diameter of a few mm, thus presenting excellent powder properties. This is particularly effective when applied to a gas phase polymerization. Further, it is also possible to obtain polymer particles having a very narrow particle size distribution. Accordingly, in the polymerization step, formation of a deposition within the polymerization reactor can be prevented. Particularly in a slurry polymerization, the separation and filtration of the polymer slurry in the separation and drying steps of the polymer can be facilitated, scattering of fine particles of the polymer out of the system can be prevented, and the drying efficiency will be improved due to the improvement in the flowability. Further, in the transfer step, no bridging will form in the silo, and there will be no trouble in the transfer.

The second effect is such that the polymerization activities are very high, and it is possible to obtain a polymer which does not require a deashing step intended to remove the catalyst residue. By virtue of the high activities, the product will be free from odor or coloring, and no purification of the polymer will be required, such being economically very advantageous.

The third effect is such that the stereospecificity of the polymer is excellent. Accordingly, the method is very advantageous for the production of a polymer by a gas phase polymerization method using no reaction medium.

Now, the present invention will be described in further detail with reference to Examples. However, it should be understood that the present invention is by no means restricted by such specific Examples.

In the Examples and Comparative Examples, the melt flow rate (hereinafter referred to simply as MFR) was measured in accordance with JIS K-7210 Condition 14.

The xylene-soluble content (hereinafter referred to simply as X_{Y}) as the index for the stereospecificity, is measured as follows. Firstly, 4 g of the polymer was dissolved in 200 ml of xylene, and then left to stand for one hour in a homoiothermal bath at 25°C. The precipitates were filtered off, and the filtrate was recovered. Xylene was evaporated almost completely, followed by vacuum drying to recover the xylene soluble content, which was represented by a percentage to the initial sample.

The catalytic activities are represented by the amount (g) of the polymer formed per g of the solid catalyst component (A).

With respect to the width of the particle size distribution of the polymer particles, the results of the classification of the polymer particles by sieves are plotted on a probability logarithmic paper to find the geometric standard deviation from the approximated straight line in known manner, and the width is expressed in terms of its common logarithm (hereinafter referred to as σ). The average particle size is a value obtained by reading the particle size corresponding to the weight accumulated value 50% of the above approximated line. The content of fine particles shows the ratio of fine particles having a particle size of 105 µm or less by weight %.

The ethylene content in the ethylene-propylene copolymer was measured by FT-lR5M Model, manufactured by Nippon Bunko K. K. and calculated from the peaks at 721 cm⁻¹, 731 cm⁻¹, 734 cm⁻¹ and 740 cm⁻¹.

### EXAMPLE 1

### (a) Preparation of solid catalyst component (A)

Into a 3 ℓ flask equipped with a stirrer, 15 g (0.62 mol) of metal magnesium powder was charged, and then 0.75 g of iodine, 401.7 g (3.1 mol) of 2-ethylhexanol, 210 g (0.62 mol) of titanium tetra-n-butoxide and 252 g (1.23 mol) of tri-i-propoxyaluminum were added thereto. The mixture was heated to 90°C and stirred for one hour under sealing with nitrogen. The temperature was further raised to 140°C, and the reaction was conducted for two hours to obtain a homogeneous solution containing magnesium, titanium and aluminum (Mg-Ti-Al solution).

Into a flask having an internal capacity of 500 ml, the Mg-Ti-Al solution was charged in an amount of 0.066 mol in terms of Mg and cooled to 0°C. Then, a solution prepared by diluting 20.5 g (0.13 mol) of isobutylaluminum dichloride with 157 ml of hexane, was added thereto over a period of two hours. After adding all the amount, the temperature was raised to 70°C over a period of two hours, whereupon a slurry containing a white solid product, was obtained. The solid product was separated by filtration and washed with hexane. Into a 1 ℓ glass electromagnetic stirring type autoclave, the slurry containing the white solid product thus obtained was charged, then, a solution prepared by diluting 125 g (0.66 mol) of titanium tetrachloride with 125 g of chlorobenzene, was added in its entire amount, and then 7.3 g (0.026 mol) of diisobutyl phthalate was added thereto. The mixture was reacted at 100°C for 3 hours. The product was subjected to filtration to collect the solid portion, which was again suspended in a solution prepared by diluting 125 g of titanium tetrachloride with 125 g of chlorobenzene, and the suspension was stirred at 100°C for two hours. Hexane was added to the product, and washing was conducted thoroughly until any freed titanium compound was no longer detected, to obtain a slurry of solid catalyst component (A) suspended in hexane. The supernatant was removed and the rest was dried under a nitrogen atmosphere and subjected to elemental analysis, whereby Ti was 2.8% by weight.

### (b) Polymerization of propylene

The internal atmosphere of an electromagnetic stirring type autoclave made of stainless steel having an internal capacity of 5 ℓ was replaced thoroughly with nitrogen, and 1.2 mmol of triethylaluminum as the catalyst component (B), 0.29 mmol of diphenyl dimethoxysilane as the catalyst component (C) and 10 mg of the solid catalyst component (A) were sequentially added thereto. The internal pressure of the autoclave was adjusted to 0.1 kg/cm² G, 0.2 kg/cm² G of hydrogen was added, 2,000 ml of liquefied propylene was added thereto. After initiating the stirring, the temperature was raised to 70°C, and the polymerization was conducted for 90 minutes. After completion of the polymerization reaction, the stirring was stopped and at the same time, unreacted propylene in the system was discharged, and the formed polymer was recovered. As a result, the formed polymer was 307 g, which corresponded to a catalytic activity of 30,700 g/g. Various properties of the polymer particles were measured, whereby MFR was found to be 1.5 g/10 minutes, X_{Y} was found to be 1.3%, the bulk density was found to be 0.43 g/cm³, the average particle size was found to be 5,850 µm, σ was found to be 0.14, and the content of fine particles was found to be 0% by weight. Further, the formed polymer particles were spherical.

### EXAMPLE 2

A solid catalyst component was prepared in the same manner as in Example 1 (a) except that a 500 ml flask having a buffle and equipped with a stirrer was used for the preparation of the solid product by adding the hexane solution of isobutylaluminum dichloride to the Mg-Ti-Al solution. Using the solid catalyst component thus obtained, polymerization of propylene was conducted under the same conditions as in Example 1 (b). As a result, the catalytic activity was found to be 28,900 g/g. Various properties of the polymer particles were measured, whereby MFR was found to be 1.4 g/10 minutes, X_{Y} was found to be 1.2%, the bulk density was found to be 0.45 g/cm³, the average particle size was found to be 3460 µm, σ was found to be 0.12, and the content of fine particles was found to be 0% by weight. The formed polymer particles were spherical.

### EXAMPLE 3

A solid catalyst component was prepared in the same manner as in Example 1 (a) except that when the chlorobenzene solution of TiCl₄ was reacted to the white solid product, a 1 ℓ glass electromagnetic stirring type autoclave was used as the reactor, and the reaction was conducted while supplying propylene under a pressure of 2.0 kg/cm² G. Using the solid catalyst component thus obtained, polymerization of propylene was conducted under the same conditions as in Example 1. As a result, the catalytic activity was found to be 48,000 g/g. Various properties of the polymer particles were measured, whereby MFR was found to be 1.9 g/10 minutes, X_{Y} was found to be 1.2%, the bulk density was found to be 0.42 g/cm³, the average particle size was found to be 6,200 µm, σ was found to be 0.13, and the content of fine particles was found to be 0% by weight. Further, the formed polymer particles were spherical.

### EXAMPLE 4

### (a) Preparation of solid catalyst component (A)

Preparation of a Mg-Ti-Al solution was conducted in the same manner as in Example 1.

Into a flask having an internal capacity of 500 ml, this Mg-Ti-Al solution was charged in an amount of 0.066 mol in terms of Mg and cooled to 0°C. Then, a solution prepared by diluting 10.3 g (0.066 mol) of isobutylaluminum dichloride with 79 ml of hexane, was added thereto over a period of two hours. After adding all the amount, the temperature was raised to 40°C over a period of 30 minutes, and a solution prepared by diluting 10.3 g (0.066 mol) of isobutylaluminum dichloride with 79 ml of hexane, was again added over a period of one hour. After adding all the amount, the temperature was raised to 70°C over a period of 30 minutes, whereby a slurry containing a white solid product was obtained. The solid product was separated by filtration and washed with hexane. To the slurry containing the white solid product thus obtained, a chlorobenzene solution of TiCl₄ was added, and the reaction was conducted in the same manner as in Example 1 (a) to obtain a slurry of solid catalyst component (A).

### (b) Polymerization of propylene

Using the solid catalyst component thus obtained, polymerization of propylene was conducted under the same conditions as in Example 1 (b). As a result, the catalytic activity was found to be 39,100 g/g. Various properties of the polymer particles were measured, whereby MFR was found to be 3.0 g/10 minutes, X_{Y} was found to be 1.2%, the bulk density was found to be 0.49 g/cm³, the average particle size was found to be 2,250 µm, σ was found to be 0.18, and the content of fine particles was found to be 0% by weight. Further, the formed polymer particles were spherical.

### EXAMPLE 5

### (a) Preparation of solid catalyst component (A)

The solid catalyst component (A) was prepared in the same manner as in Example 1 (a).

### (b) Polymerization of propylene

The internal atmosphere of an electromagnetic stirring type reactor made of stainless steel having an internal volume of 1 ℓ was replaced thoroughly with nitrogen, and 5.0g of a solid catalyst component prepared in the same manner as in Example 1 (a), 300 ml of hexane and 12.5 mmol of triethylaluminum, were sequentially added. The internal pressure of the autoclave was adjusted to 0.1 kg/cm² G, and the internal temperature was adjusted to 20°C. Then, stirring was initiated, and 25 g of propylene was supplied in 20 minutes while maintaining the internal temperature at 20°C, and stirring was continued for 30 minutes. A propylene prepolymer of solid catalyst component (A) thus obtained was separated by filtration and thoroughly washed with hexane to obtain a hexane slurry of the propylene prepolymer of solid catalyst component (A). The supernatant was removed and the rest was dried under a nitrogen atmosphere, whereby the yield was 28.5 g. Polymerization of propylene was conducted under the same conditions as in Example 1 (b) using 57 mg of this prepolymer instead of 10 mg of the solid catalyst component (A). As a result, the catalytic activity was found to be 58,900 g/g in terms of the solid catalyst component (A). Various properties of the polymer particles were measured, whereby MFR was found to be 5.3 g/10 minutes, X_{Y} was found to be 1.1%, the bulk density was found to be 0.40 g/cm³, the average particle size was found to be 6,500 µm, σ was found to be 0.11, and the content of fine particles was found to be 0% by weight. Further, formed polymer particles were spherical.

### EXAMPLE 6

A prepolymer of solid catalyst component (A) was prepared in the same manner as in Example 5 except that in Example 5 (b), after supplying 25 g of propylene, 0.5 kg/cm² G of ethylene was continuously supplied under pressure for 20 minutes. The supernatant was removed and the rest was dried under a nitrogen atmosphere, whereby yield of the prepolymer was 64.0 g. Using 128 mg of the prepolymer thus obtained, polymerization of propylene was conducted under the same conditions as in Example 1 (b). As a result, the catalytic activity was found to be 50,500 g/g. Various properties of the polymer particles were measured, whereby MFR was found to be 5.2 g/10 minutes, X_{Y} was found to be 1.1%, the bulk density was found to be 0.42 g/cm², the average particle size was found to be 6,550 µm, σ was found to be 0.13, and the content of fine particles was found to be 0% by weight. Further, the formed polymer particles were spherical.

### EXAMPLE 7

A prepolymer of solid catalyst component (A) was prepared in the same manner as in Example 5 except that when the prepolymer of solid catalyst component (A) was prepared in Example 5 (b), 0.4 kg/cm² G of a monomer mixture of a propylene/ethylene ratio of about 2 mol/mol was continuously supplied under pressure for 40 minutes instead of supplying 25 g of propylene. The supernatant was removed, and after drying under a nitrogen atmosphere, the yield of the prepolymer was 7.5 g. Using 15 mg of the prepolymer thus obtained, polymerization of propylene was conducted under the same conditions as in Example 1 (b). As a result, the catalytic activity was found to be 44,200 g/g. Various properties of the polymer particles were measured, MFR was found to be 1.3 g/10 minutes, X_{Y} was found to be 1.1%, the bulk density was found to be 0.39 g/cm³, the average particle size was found to be 6.200 µm, σ was found to be 0.10, and the content of fine particles was found to be 0% by weight. Further, the formed polymer particles were spherical.

### EXAMPLE 8

A solid catalyst component was prepared in the same manner as in Example 1 (a) except that when the solid catalyst component (A) was prepared in Example 1 (a), 303 g (1.23 mol) of tri-n-butoxyaluminum was used instead of tri-i-propoxyaluminum as the above component (ii). Using the solid catalyst component thus obtained, polymerization of propylene was conducted under the same condition as in Example 1 (b). As a result, the catalytic activity was found to be 29,200 g/g. Various properties of the polymer particles were measured, whereby MFR was found to be 1.6 g/10 minutes, X_{Y} was found to be 1.2%, the bulk density was found to be 0.47 g/cm³, the average particle size was found to be 2,040 µm, σ was found to be 0.06, and the content of fine particles was found to be 0% by weight. Further, the formed polymer particles were spherical.

### EXAMPLE 9

A solid catalyst component was prepared in the same manner as in Example 1 (a) except that when the solid catalyst component (A) was prepared in Example 1 (a), 152 g (0.62 mol) of tri-n-butoxyaluminum was used instead of tri-i-propoxyaluminum as the above component (ii). Using the solid catalyst component thus obtained, polymerization of propylene was conducted under the same conditions as in Example 1 (b). As a result, the catalytic activity was found to be 30,100 g/g. Various properties of the polymer particles were measured, whereby MFR was found to be 1.9 g/10 minutes, X_{Y} was found to be 1.2%, the bulk density was found to be 0.45 g/cm³, the average particle size was found to be 2,120 µm, σ was found to be 0.06, and the content of fine particles was found to be 0% by weight. Further, the formed polymer particles were spherical.

### EXAMPLE 10

A solid catalyst component was prepared in the same manner as in Example 1 (a) except that when the solid catalyst component (A) was prepared in Example 1 (a), 16.8 g (0.13 mol) of ethylaluminum dichloride was used instead of isobutylaluminum dichloride as the above component (iv). Using the solid catalyst component thus obtained, polymerization of propylene was conducted under the same conditions as in Example 1 (b). As a result, the catalytic activity was found to be 28,200 g/g. Various properties of the polymer particles were measured, whereby MFR was found to be 1.7 g/10 minutes, X_{Y} was found to be 1.1%, the bulk density was found to be 0.45 g/cm³, the average particle size was found to be 2,650 µm, σ was found to be 0.14, and the content of fine particles was found to be 0% by weight. Further, the formed polymer particles were spherical.

### EXAMPLE 11

A solid catalyst component was prepared in the same manner as in Example 1 (a) except that when the solid catalyst component (A) was prepared in Example 1 (a), 303 g (1.23 mol) of tri-n-butoxyaluminum was used instead of tri-i-propoxyaluminum as the above component (ii), and 16.8 g (0.13 mol) of ethylaluminum dichloride was used instead of isobutylaluminum dichloride as the above component (iv). Using the solid catalyst component thus obtained, polymerization of propylene was conducted under the same conditions as in Example 1 (b). As a result, the catalytic activities was found to be 25,600 g/g. Various properties of the polymer particles were measured, whereby MFR was found to be 1.9 g/10 minutes, X_{Y} was found to be 1.3%, the bulk density was found to be 0.44 g/cm³, the average particle size was found to be 1,930 µm, σ was found to be 0.06, and the content of fine particles was found to be 0% by weight. Further, the formed polymer particles were spherical.

### EXAMPLE 12

A solid catalyst component was prepared in the same manner as in Example 1 (a) except that 4.0 g (0.027 mol) of ethylbenzoate was used instead of diisophthalate as the above component (v). Using the solid catalyst component thus obtained, polymerization of propylene was conducted under the same conditions as in Example 1 (b). Using 0.33 mmol of ethyl p-ethoxybenzoate instead of diphenyldimethoxysilane as the catalyst component (C). As a result, the catalytic activity was found to be 10,700 g/g. Various properties of the polymer particles were measured, whereby MFR was found to be 1.5 g/10 minutes, X_{Y} was found to be 4.5%, the bulk density was found to be 0.42 g/cm³, the average particle size was found to be 3,320 µm, σ was found to be 0.07, and the content of fine particles was found to be 0% by weight. Further, the formed polymer particles were spherical.

### EXAMPLE 13

A solid catalyst component was prepared in the same manner as in Example 1 (a) except that 4.3 g (0.026 mol) of ethyl p-toluate was used instead of diisobutyl phthalate as the above component (v). Using the solid catalyst component thus obtained, polymerization of propylene was conducted under the same conditions as in Example 1 (b), using 0.33 mmol of ethyl p-toluate instead of diphenyldimethoxysilane as the catalyst component (C). As a result, the catalytic activity was found to be 14,700 g/g. Various properties of the polymer particles were measured, whereby MFR was found to be 1.8 g/10 minutes, X_{Y} was found to be 3.5%, the bulk density was found to be 0.46 g/cm³, the average particle size was found to be 3,160 µm, σ was found to be 0.14, and the content of fine particles was found to be 0% by weight. Further, the formed polymer particles were spherical.

### EXAMPLE 14

### (b) Copolymerization of ethylene and propylene

The internal atmosphere of an electromagnetic stirring type autoclave made of stainless steel having an internal capacity of 5 ℓ was replaced thoroughly with nitrogen, and 1.2 mmol of triethylaluminum as the catalyst component (B), 0.29 mmol of diphenyldimethoxysilane as the catalyst component (C) and 10 mg of the solid catalyst component (A) prepared in Example 1 were sequentially added. The internal pressure of the autoclave was adjusted to 0.1 kg/cm² G, and 0.2 kg/cm² (1 kg/cm² = 0.981 bar) of hydrogen and 2,000 ml of liquid propylene were added. After initiating the stirring, the temperature was raised to 70°C and ethylene was supplied under a partial pressure of 0.5 kg/cm² G for 10 minutes from the initiation of the polymerization and polymerized for 90 minutes. After completion of polymerization reaction, stirring was stopped and at the same time, unreacted propylene in the system was discharged, and the formed polymer was recovered. As a result, the catalytic activity corresponded to 38,900 g/g. Various properties of the polymer particles were measured, whereby the ethylene content was found to be 4.4%, MFR was found to be 3.7 g/10 minutes, the bulk density was found to be 0.44 g/cm³, the average particle size was found to be 5,920 µm, σ was found to be 0.14, and the content of fine particles was found to be 0% by weight. Further, the formed polymer particles were spherical.

### EXAMPLE 15

### (b) Copolymerization of ethylene and propylene

Polymerization of propylene was conducted under the same condition as in Example 14 (b) except that in Example 14, the supply of ethylene was conducted for 20 minutes from ten minutes after the initiation of polymerization under a partial pressure of 7.0 kg/cm² G and the polymerization time was changed to 60 minutes. As a result, the catalytic activity corresponded to 37,600 g/g. Various properties of the polymer particles were measured, whereby the ethylene content was found to be 17%, MFR was found to be 4.5 g/10 minutes, the bulk density was found to be 0.35 g/cm³, the average particle size was found to be 4,730 µm, σ was found to be 0.19, and the content of fine particles was found to be 0% by weight. Further, the formed polymer particles were spherical.

### COMPARATIVE EXAMPLE 1

A solid catalyst component was prepared in the same manner as in Example 1 (a) except that tri-i-propoxyaluminum added as the above component (ii) in Example 1, was not added. Using the solid catalyst component thus obtained, polymerization of propylene was conducted under the same conditions as in Example 1 (b). As a result, the catalytic activity was found to be 31,900 g/g. Various properties of the polymer particles were measured, whereby MFR was found to be 2.2 g/10 minutes, X_{Y} was found to be 1.0%, the bulk density was found to be 0.48 g/cm³, the average particle size was found to be 1,300 µm, σ was found to be 0.10, and the content of fine particles was found to be 0% by weight. Further, the formed polymer particles were spherical.

### COMPARATIVE EXAMPLE 2

A solid catalyst component was prepared in the same manner as in Example 1 (a) except that when the solid catalyst component (A) was prepared in Example 1 (a), 737 g (4.3 mol) of silicon tetrachloride was used instead of isobutylaluminum dichloride as the above component (iv). Using the solid catalyst component thus obtained, polymerization of propylene was conducted under the same conditions as in Example 1 (b). As a result, the catalytic activity was found to be 7,200 g/g. Various properties of the polymer particles were measured, whereby MFR was found to be 2.5 g/10 minutes, X_{Y} was found to be 1.5%, the bulk density was found to be 0.29 g/cm³, the average particle size was found to be 620 µm, σ was found to be 0.70, and the content of fine particles was found to be 22% by weight. Further, the polymer particles had irregular shapes.

### COMPARATIVE EXAMPLE 3

A solid catalyst component was prepared in the same manner as in Example 1 (a) except that when the solid catalyst component (A) was prepared in Example 1 (a), 823 g (4.3 mol) of titanium tetrachloride was used instead of isobutylaluminum dichloride as the above component (iv). Using the solid catalyst component thus obtained, polymerization of propylene was conducted under the same conditions as in Example 1 (b). As a result, the catalytic activity was found to be 7,900 g/g. Various properties of the polymer particles were measured, whereby MFR was found to be 1.7 g/10 minutes, X_{Y} was found to be 1.8%, the bulk density was found to be 0.31 g/cm³, the average particle size was found to be 980 µm, σ was found to be 1.0, and the content of fine particles was found to be 20% by weight. Further, the polymer particles had irregular shapes.

The results of polymerization in Examples 1 to 7 are shown in Table 1, the results of polymerization in Examples 8 to 13 are shown in Table 2, the results of polymerization in Example 14 and 15 are shown in Table 3, and the results of polymerization of Comparative Examples 1 to 3 are shown in Table 4.

### EXAMPLES 16 to 24

Using the solid catalyst component (A) prepared in Example 1 (a), polymerization of propylene was conducted under the same conditions as in Example 1 (b) except that oxygen-containing organic compounds of silicon as identified in Table 5 were, respectively, used instead of diphenyldimethoxysilane used as the catalytic component (C) in Example 1. the catalytic activities and MFR, X_{Y}, bulk densities, average particles sizes, σ and contents of fine particles of the polymer particles are shown in Table 5.

### COMPARATIVE EXAMPLES 4 to 7

Using the solid catalyst component (A) prepared in Comparative Example 2 (a), polymerization of propylene was conducted under the same conditions as in Comparative Example 2 (b) except that oxygen-containing organic compounds of silicon as identified in Table 6 were, respectively, used instead of diphenyldimethoxysilane used as the catalytic component (C) in Comparative Example 2. The catalytic activities and MFR, X_{Y}, bulk densities, average particle sizes, σ and contents of fine particles of the polymer particles are shown in Table 6.

### COMPARATIVE EXAMPLES 8 to 11

Using the solid catalyst component (A) prepared in Comparative Example 3 (a), polymerization of propylene was conducted under the same conditions as in Comparative Example 3 (b) except that oxygen-containing organic compounds of silicon as identified in Table 7 were, respectively, used instead of diphenyldimethoxysilane used as the catalytic component (C) in Comparative Example 3. The catalytic activities and MFR, X_{Y}, bulk densities, average particle sizes, σ and contents of fine particles of the polymer particles are shown in Table 7.

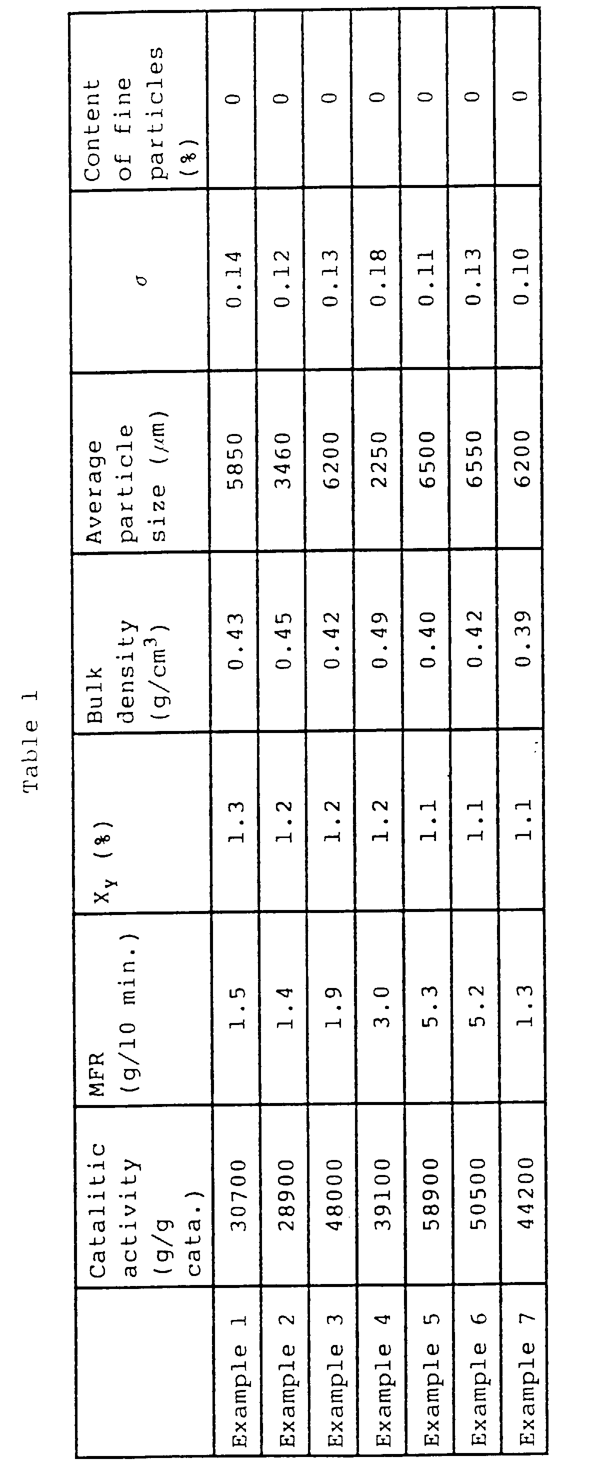

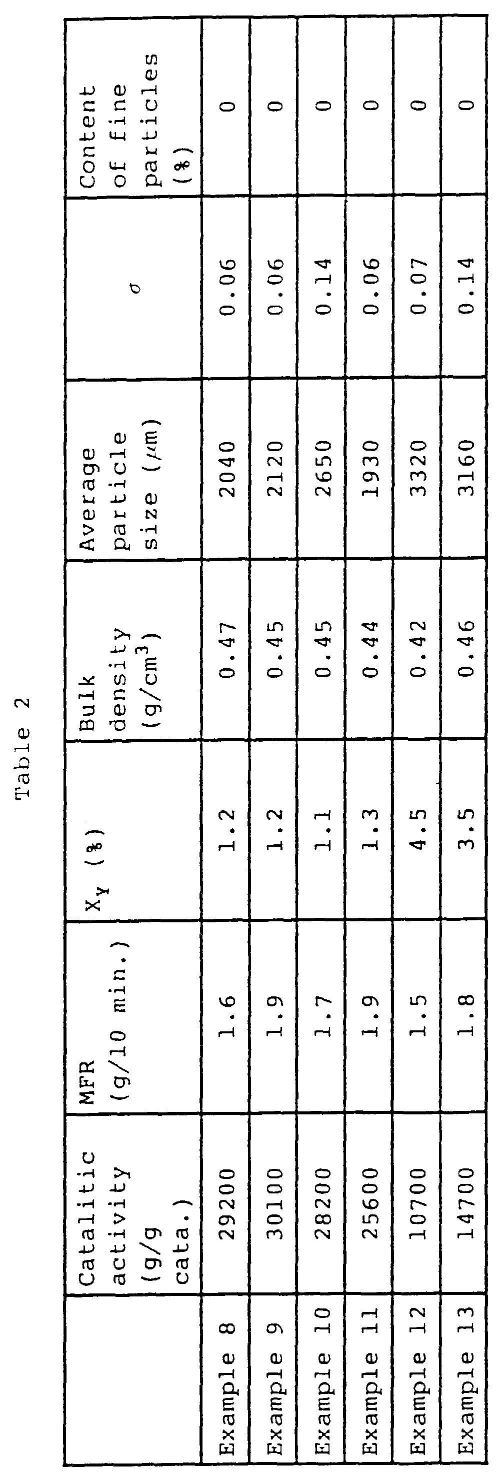

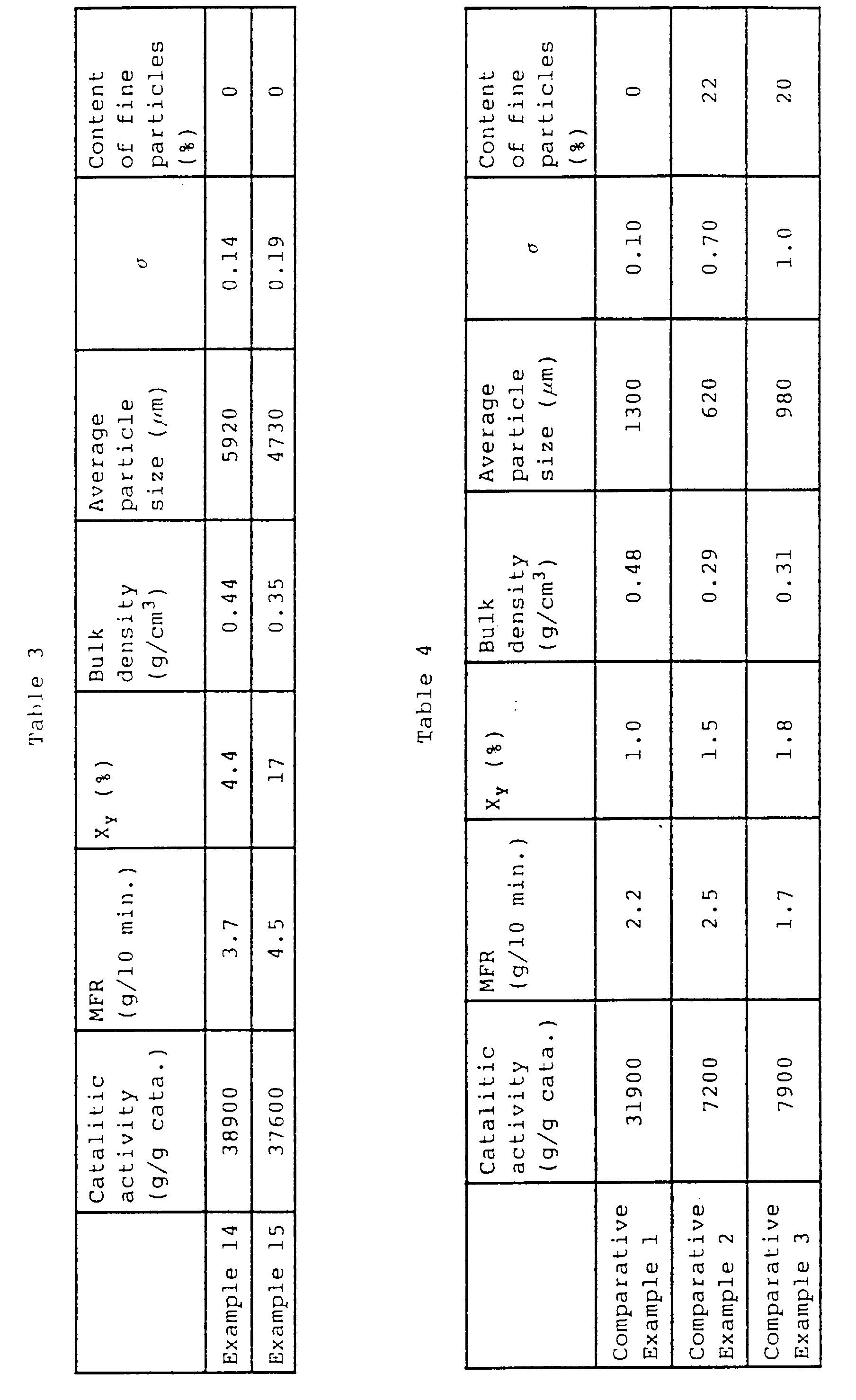

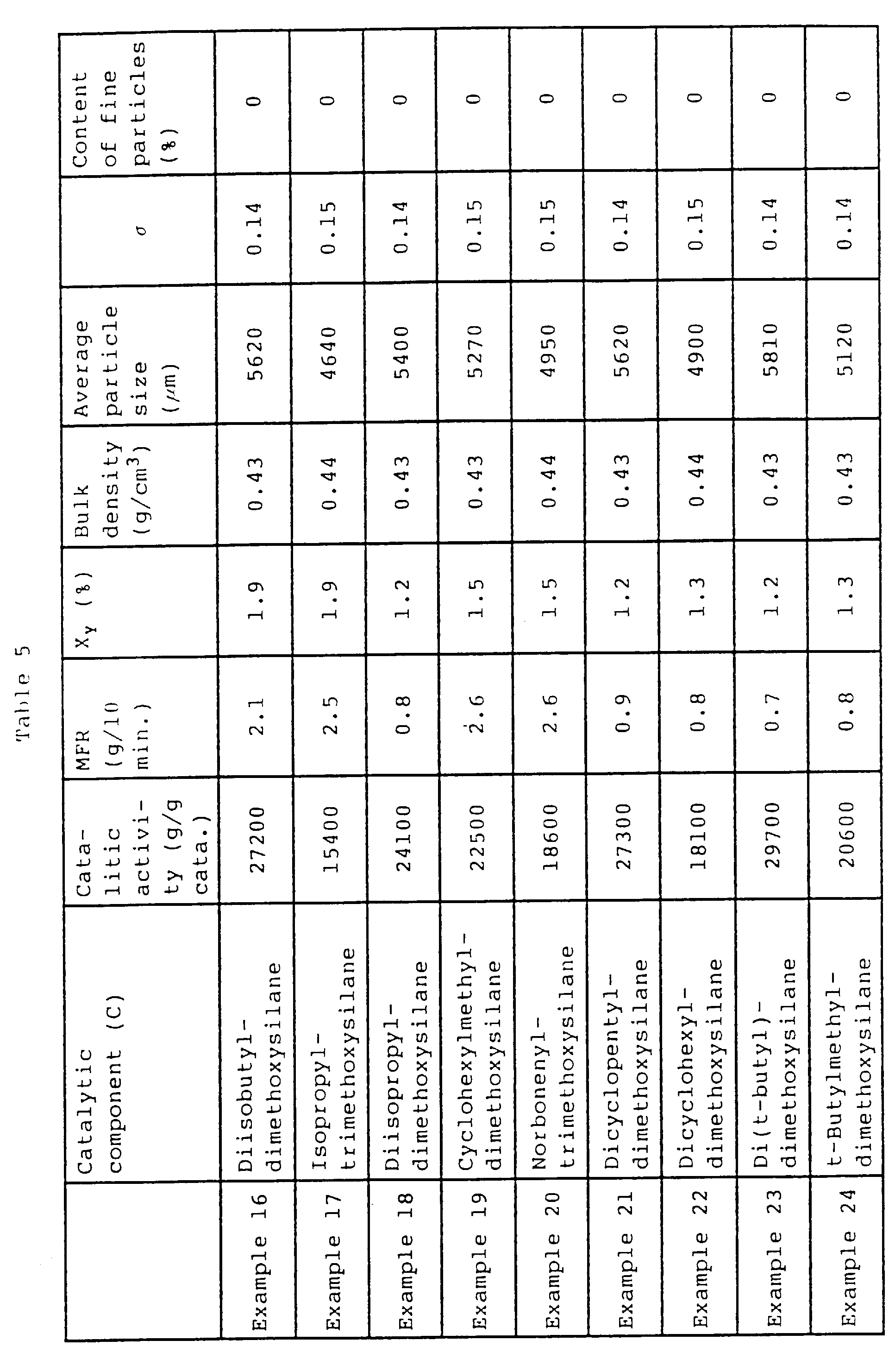

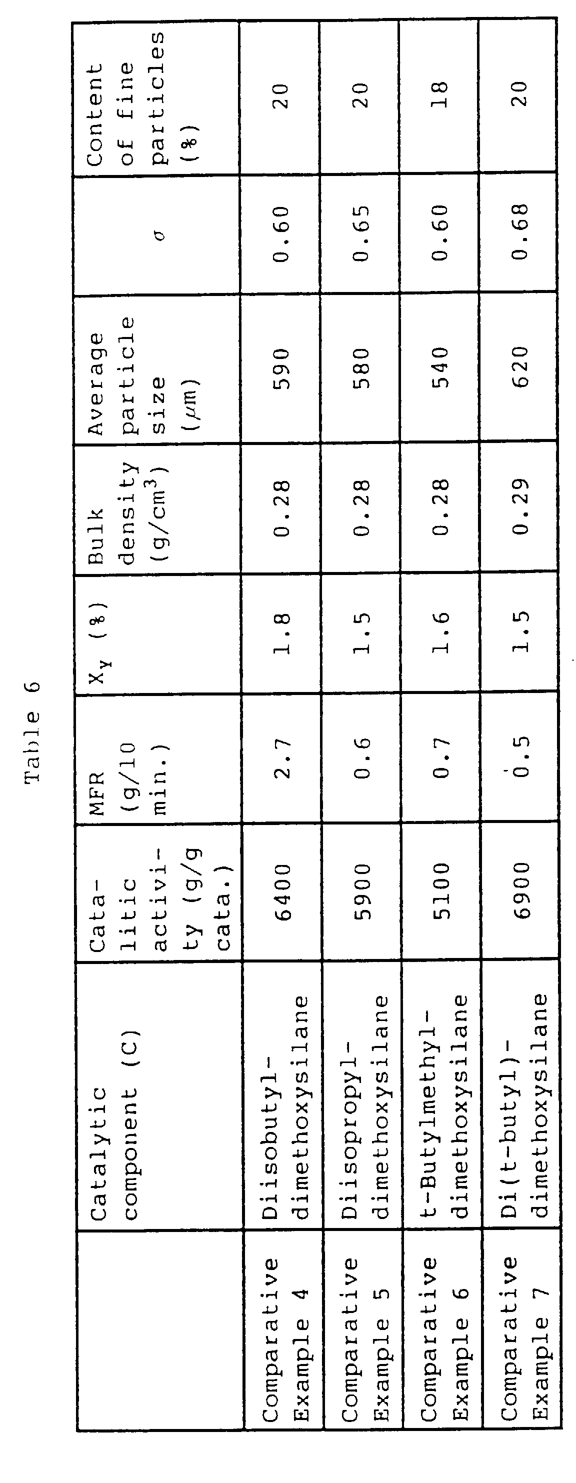

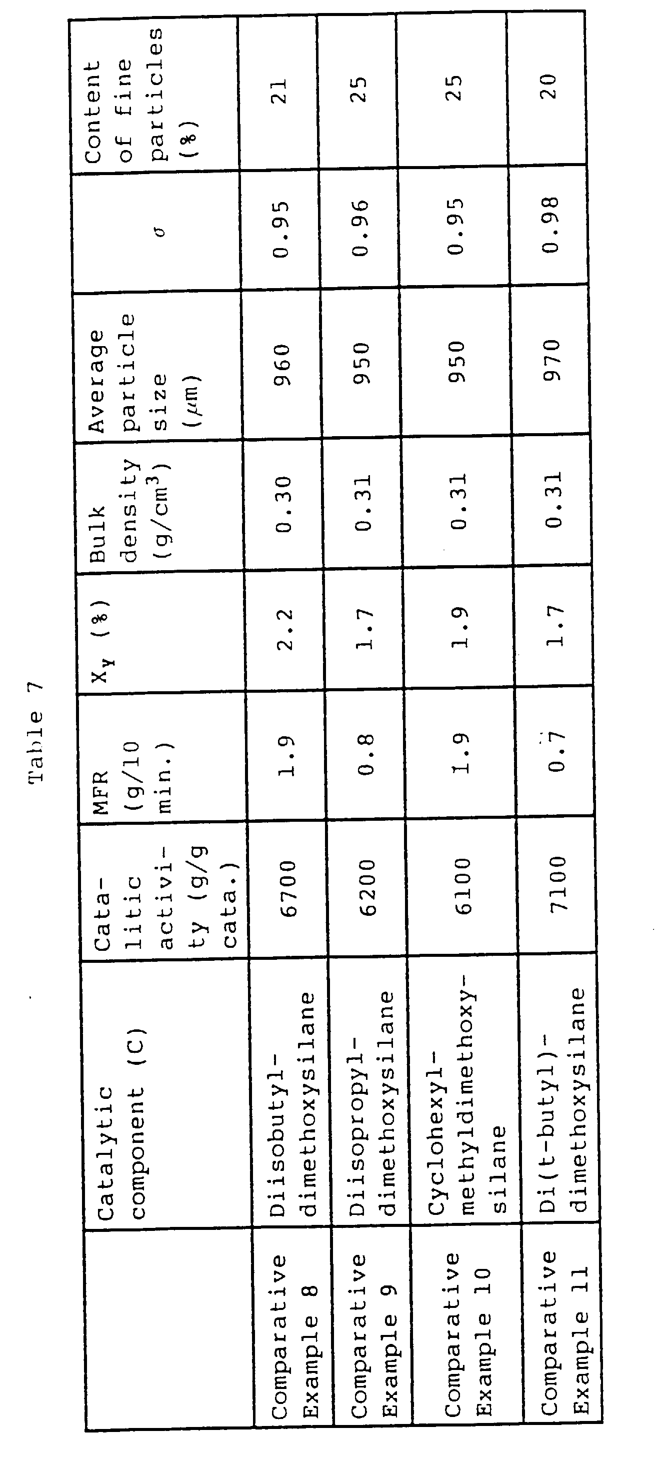

## Claims

1. A method for producing a stereospecific polyolefin in the presence of a catalyst comprising a transition metal compound and an organometallic compound, wherein a catalyst system is used which comprises:
(A) a solid catalyst component prepared by reacting a homogeneous solution containing
(i) at least one member selected from the group consisting of (a) metal magnesium and a hydroxylated organic compound, and (b) oxygen-containing organic compounds of magnesium,
(ii) an oxygen-containing organic compound of aluminum and
(iii) an oxygen-containing organic compound of titanium, with
(iv) at least one aluminum halide compound to obtain a solid product, and further reacting to this solid product
(v) an electron-donative compound and
(vi) a titanium halide compound,
(B) at least one member selected from the group consisting of organometallic compounds of Groups 1, 2, - 12, 13 and 14 of the Periodic Table, and
(C) an electron-donative compound.

2. The method according to Claim 1, wherein the reactant (i) is a combination of metal magnesium and at least one hydroxylated organic compound selected from the group consisting of alcohols and organosilanols.

3. The method according to Claim 1, wherein the reactant (ii) is an oxygen-containing organic compound of the formula Al(OR¹)ₘX₃₋ₘ, wherein R¹ is a hydrocarbon group having from 1 to 20 carbon atoms, X is a halogen atom, and m is a number of 0<m≦3.

4. The method according to Claim 1, wherein the reactant (iii) is a compound of the formula [OₚTi (OR²)q]n wherein R² is a hydrocarbon group having from 1 to 20 carbon atoms, p = 0, q = 4, and n is an integer.

5. The method according to Claim 1, wherein the aluminum halide compound for the reactant (iv) is a compound of the formula AlR³ᵣX₃₋ᵣ wherein R³ is a hydrocarbon group having from 1 to 20 carbon atoms, X is a halogen atom, and r is a number of 0<r≦2.

6. The method according to Claim 1, wherein the reactant (v) is an ether, an ester, a ketone, a phenol, an amine, an amide, an imine, a nitrile, a phosphine, a phosphite, a stibine, an arsine, a phosphoryl amide or an alcoholate.

7. The method according to Claim 1, wherein the reactant (vi) is a compound of the formula Ti(OR⁴)_{f}X_{4-f} wherein R⁴ is a hydrocarbon group having from 1 to 20 carbon atoms, X is a halogen atom, and f is a number of 0≦f<4.

8. The method according to Claim 1, wherein the molar ratio of the oxygen-containing organic compound of aluminum (ii) to the magnesium atom of the reactant (i) is from 0.01 to 20; the molar ratio of the oxygen-containing organic compound of titanium (iii) to the magnesium atom of the reactant (i) is from 0.01 to 20; the atomic ratio of the aluminum atom of the reactant (iv) to the magnesium atom of the reactant (i) is from 0.1 to 100; the molar ratio of the electron-donative compound (v) to the magnesium atom of the reactant (i) is from 0.05 to 5.0; and the molar ratio of the titanium halide compound (vi) to the magnesium atom of the reactant (i) is from 1 to 100.

9. The method according to Claim 1, wherein the catalyst component (B) is selected from the group consisting of tri-C₁-C₁₀ alkyl aluminum, C₁-C₂₀ alkyl metal halides and C₁-C₂₀ alkyl metal alkoxides.

10. The method according to Claim 1, wherein the electron-donative compound (C) is an organic ester, an oxygen-containing organic compound of silicon, or a nitrogen-containing organic compound.

11. The method according to Claim 1, wherein the reaction with the reactant (vi) is repeated several times in the presence or absence of ethylene and/or an α-olefin of the formula R-CH=CH₂ wherein R is a linear or branched substituted or unsubstituted alkyl group having from 1 to 10, particularly from 1 to 8, carbon atoms, or a hydrogen atom.

12. The method according to Claim 1, wherein solid catalyst component (A) is used in a preliminarily polymerized form which is obtained by adding a small amount of an organometallic compound component to the solid catalyst component (A) described in Claim 1 and polymerizing a small amount of an α-olefin and/or ethylene of the formula R-CH=CH₂ wherein R is a linear or branched substituted or unsubstituted alkyl group having from 1 to 10, particularly from 1 to 8, carbon atoms, or a hydrogen atom, in the presence of the mixture of said organometallic compound component and said solid catalyst component (A) described in Claim 1.

## Patentansprüche

1. Verfahren zur Herstellung eines stereospezifischen Polyolefins in Gegenwart eines Katalysators, der eine Übergangsmetallverbindung und eine metallorganische Verbindung umfaßt, wobei ein Katalysatorsystem verwendet wird, das umfaßt:
(A) eine feste Katalysatorkomponente, die hergestellt wird durch Umsetzung einer homogenen Lösung, enthaltend
(i) mindestens ein Element, ausgewählt aus der Gruppe, bestehend aus (a) Magnesiummetall und einer hydroxylierten organischen Verbindung sowie (b) Sauerstoff-enthaltenden organischen Magnesiumverbindungen,
(ii) eine Sauerstoff-enthaltende organische Aluminiumverbindung und
(iii) eine Sauerstoff-enthaltende organische Titanverbindung, mit
(iv) mindestens einer Aluminiumhalogenidverbindung, um ein festes Produkt zu erhalten, und weitere Umsetzung dieses festen Produkts mit
(v) einer Elektronen-donierenden Verbindung und
(vi) einer Titaniumhalogenidverbindung,
(B) mindestens ein Element, ausgewählt aus der Gruppe, bestehend aus metallorganischen Verbindungen der Gruppen 1, 2, 12, 13 und 14 des Periodensystems, und
(C) eine Elektronen-donierende Verbindung.

2. Verfahren gemäß Anspruch 1, wobei der Reaktionspartner (i) eine Kombination aus Magnesiummetall und mindestens einer hydroxylierten organischen Verbindung, ausgewählt aus der Gruppe, bestehend aus Alkoholen und Organosilanolen, ist.

3. Verfahren gemäß Anspruch 1, wobei der Reaktionspartner (ii) eine Sauerstoff-enthaltende organische Verbindung der Formel Al(OR¹)ₘX₃₋ₘ ist, wobei R¹ eine Kohlenwasserstoffgruppe mit 1 bis 20 Kohlenstoffatomen ist, X ein Halogenatom ist und m eine Zahl ist, die 0<m≤3 genügt.

4. Verfahren gemäß Anspruch 1, wobei der Reaktionspartner (iii) eine Verbindung der Formel [OₚTi(OR²)_{q}]ₙ ist, wobei R² eine Kohlenwasserstoffgruppe mit 1 bis 20 Kohlenstoffatomen ist, p = 0, q = 4, und n eine ganze Zahl ist.

5. Verfahren gemäß Anspruch 1, wobei die Aluminiumhalogenidverbindung für den Reaktionspartner (iv) eine Verbindung der Formel AlR³ᵣX₃₋ᵣ ist, wobei R³ eine Kohlenwasserstoffgruppe mit 1 bis 20 Kohlenstoffatomen ist, X ein Halogenatom ist, und r eine Zahl ist, die 0<r≤2 genügt.

6. Verfahren gemäß Anspruch 1, wobei der Reaktionspartner (v) ein Ether, ein Ester, ein Keton, ein Phenol, ein Amin, ein Amid, ein Imin, ein Nitril, ein Phosphin, ein Phosphit, ein Stibin, ein Arsin, ein Phosphorylamid oder ein Alkoholat ist.

7. Verfahren gemäß Anspruch 1, wobei der Reaktionspartner (vi) eine Verbindung der Formel Ti(OR⁴)_{f}X_{4-f} ist, wobei R⁴ eine Kohlenwasserstoffgruppe mit 1 bis 20 Kohlenstoffatomen ist, X ein Halogenatom ist und f eine Zahl ist, die 0≤f<4 genügt.

8. Verfahren gemäß Anspruch 1, wobei das molare Verhältnis der Sauerstoff-enthaltenden organischen Aluminiumverbindung (ii) zu den Magnesiumatomen des Reaktionspartners (i) von 0,01 bis 20 beträgt; das molare Verhältnis der Sauerstoff-enthaltenden organischen Titanverbindung (iii) zu den Magnesiumatomen des Reaktionspartners (i) 0,01 bis 20 beträgt; das Atomverhältnis der Aluminiumatome des Reaktionspartners (iv) zu den Magnesiumatomen des Reaktionspartners (i) 0,1 bis 100 beträgt; das molare Verhältnis der Elektronen-donierenden Verbindung (v) zu den Magnesiumatomen des Reaktionspartners (i) 0,05 bis 5,0 beträgt; und das molare Verhältnis der Titanhalogenidverbindung (vi) zu den Magnesiumatomen des Reaktionspartners (i) 1 bis 100 beträgt.

9. Verfahren gemäß Anspruch 1, wobei die Katalysatorkomponente (B) ausgewählt wird aus der Gruppe, bestehend aus Tri-C₁-C₁₀-alkylaluminium, C₁-C₂₀-Alkylmetallhalogeniden und C₁-C₂₀-Alkylmetallalkoxiden.

10. Verfahren gemäß Anspruch 1, wobei die Elektronen-donierende Verbindung (C) ein organischer Ester, eine Sauerstoff-enthaltende organische Siliciumverbindung oder eine Stickstoff-enthaltende organische Verbindung ist.

11. Verfahren gemäß Anspruch 1, wobei die Reaktion mit dem Reaktionspartner (vi) mehrere Male in Gegenwart oder Abwesenheit von Ethylen und/oder einem β-Olefin der Formel R-CH=CH₂ wiederholt wird, wobei R eine lineare oder verzweigte substituierte oder unsubstituierte Alkylgruppe mit 1 bis 10, insbesondere 1 bis 8, Kohlenstoffatomen oder ein Wasserstoffatom ist.

12. Verfahren gemäß Anspruch 1, wobei die feste Katalysatorkomponente (A) in einer vorläufig polymerisierten Form verwendet wird, die erhältlich ist durch Zugabe einer kleinen Menge einer metallorganischen Verbindungskomponente zu der festen Katalysatorkomponente (A), wie sie in Anspruch 1 beschrieben wird, und Polymerisation einer kleinen Menge eines α-Olefins und/oder Ethylen der Formel R-CH=CH₂, wobei R für eine lineare oder verzweigte substituierte oder unsubstituierte Alkylgruppe mit 1 bis 10, insbesondere 1 bis 8, Kohlenstoffatomen oder ein Wasserstoff steht, in Gegenwart des Gemisches der metallorganischen Verbindungskomponente und der festen Katalysatorkomponente (A), wie sie in Anspruch 1 beschrieben wird.

## Revendications

1. Procédé pour produire une polyoléfine stéréospécifique en présence d'un catalyseur comprenant un composé de métal de transition et un composé organométallique, dans lequel on utilise un système catalyseur qui comprend:
(A) un composant de catalyseur solide préparé en faisant réagir une solution homogène contenant
(i) au moins un élément choisi dans le groupe constitué (a) de magnésium métallique et d'un composé organique hydroxylé, et (b) de composés organiques de magnésium contenant de l'oxygène,
(ii) un composé organique d'aluminium contenant de l'oxygène et
(iii) un composé organique de titane contenant de l'oxygène, avec
(iv) au moins un composé halogénure d'aluminium pour obtenir un produit solide, et en faisant ensuite réagir avec ce produit solide
(v) un composé donneur d'électrons et
(vi) un composé halogénure de titane,
(B) au moins un élément choisi dans le groupe constitué de composés organométalliques des Groupes 1, 2, 12, 13 et 14 de la Table Périodique, et
(C) un composé donneur d'électrons.

2. Procédé selon la revendication 1, dans lequel le réactif (i) est une combinaison de magnésium métallique et d'au moins un composé organique hydroxylé choisi dans le groupe constitué d'alcools et d'organosilanols.

3. Procédé selon la revendication 1, dans lequel le réactif (il) est un composé organique contenant de l'oxygène de formule Al(OR¹)ₘX₃₋ₘ, dans laquelle R¹ représente un groupe hydrocarboné présentant de 1 à 20 atomes de carbone, X représente un atome d'halogène et m représente un nombre qui vérifie 0<m≤3.

4. Procédé selon la revendication 1, dans lequel le réactif (iii) est un composé de formule [OₚTi(OR²)_{q}]ₙ dans laquelle R² représente un groupe hydrocarboné présentant de 1 à 20 atomes de carbone, p = 0, q = 4, et n représente un entier.

5. Procédé selon la revendication 1, dans lequel le composé halogénure d'aluminium constituant le réactif (iv) est un composé de formule AlR³ᵣX₃₋ᵣ, dans laquelle R³ représente un groupe hydrocarboné présentant de 1 à 20 atomes de carbone, X représente un atome d'halogène, et r représente un nombre qui vérifie 0<r≤2.

6. Procédé selon la revendication 1, dans lequel le réactif (v) est un éther, un ester, une cétone, un phénol, une amine, un amide, une imine, un nitrile, une phosphine, un phosphite, une stibine, une arsine, un phosphorylamide ou un alcoolate.

7. Procédé selon la revendication 1, dans lequel le réactif (vi) est un composé de formule Ti(OR⁴)_{f}X_{4-f}, dans laquelle R⁴ représente un groupe hydrocarboné présentant de 1 à 20 atomes de carbone, X représente un atome d'halogène et f représente un nombre qui vérifie 0≤f<4.

8. Procédé selon la revendication 1, dans lequel le rapport molaire entre le composé organique d'aluminium contenant de l'oxygène (ii) et l'atome de magnésium du réactif (i) est de 0,01 à 20 ; le rapport molaire entre le composé organique de titane contenant de l'oxygène (iii) et l'atome de magnésium du réactif (i) est de 0,01 à 20 ; le rapport atomique entre l'atome d'aluminium du réactif (iv) et l'atome de magnésium du réactif (i) est de 0,1 à 100 ; le rapport molaire entre le composé (v) donneur d'électrons et l'atome de magnésium du réactif (i) est de 0,05 à 5,0 ; et le rapport molaire entre le composé halogénure de titane (vi) et l'atome de magnésium du réactif (i) est de 1 à 100.

9. Procédé selon la revendication 1, dans lequel le composant de catalyseur (B) est choisi dans le groupe constitué de tri(alkyl en C₁ à C₁₀)aluminium, d'halogénures d'(alkyl en C₁ à C₂₀)métal et d'alcoolates d'(alkyl en C₁ à C₂₀)métal.

10. Procédé selon la revendication 1, dans lequel le composé (C) donneur d'électrons est un ester organique, un composé organique de silicium contenant de l'oxygène ou un composé organique contenant de l'azote.

11. Procédé selon la revendication 1, dans lequel la réaction avec le réactif (vi) est répétée plusieurs fois en présence ou en l'absence d'éthylène et/ou d'une α-oléfine de formule R-CH=CH₂ dans laquelle R représente un groupe alkyle linéaire ou ramifié, substitué ou non substitué, présentant de 1 à 10, en particulier de 1 à 8 atomes de carbone ou un atome d'hydrogène.

12. Procédé selon la revendication 1, dans lequel ledit composant (A) de catalyseur est utilisé sous une forme préalablement polymérisée qui est obtenue en ajoutant une petite quantité d'un composant composé organométallique au composant (A) de catalyseur solide décrit en revendication 1 et en polymérisant une petite quantité d'une α-oléfine et/ou d'éthylène de formule R-CH=CH₂ dans laquelle R représente un groupe alkyle linéaire ou ramifié, substitué ou non substitué, présentant de 1 à 10, en particulier de 1 à 8 atomes de carbone ou un atome d'hydrogène, en présence du mélange dudit composant composé organométallique et dudit composant (A) de catalyseur solide décrit en revendication 1.
